# EUROPEAN PATENT APPLICATION

(11) **EP 2 045 950 A2**
(43) Date of publication of application: **08.04.2009**
(21) Application number: 08014657.4
(22) Date of filing: 18.08.2008
(51) Int. Cl.: H04L 1/18

(54) **Method and apparatus for triggering a poll function in a wireless communications system**

(30) Priority: 16.08.2007 US 956127 P
(71) Applicant: Innovative Sonic Limited, Tortola (VG)
(72) Inventor: Jiang, Sam, Shiaw-Shiang, Peitou Taipei City (TW)
(74) Representative: Hager, Thomas Johannes

(57) **Abstract**

A method for triggering a poll function in a transmitter of a wireless communications system includes triggering the poll function for polling status of a receiver, and a radio link control entity of the transmitter supporting a "Last PDU" trigger and a "Poll retransmission timer" trigger, and not supporting a "Periodic Timer" trigger (402).

## Description

This application claims the benefit of U.S. Provisional Application No. 60/956,127, filed on Aug 16, 2007 and entitled "Poll triggers for ARQ procedure."

The present invention relates to a method and apparatus for triggering a poll function in a wireless communications system according to the pre-characterizing clauses of claims 1 and 12.

The third generation (3G) mobile telecommunications system has adopted a Wideband Code Division Multiple Access (WCDMA) wireless air interface access method for a cellular network. WCDMA provides high frequency spectrum utilization, universal coverage, and high quality, high-speed multimedia data transmission. The WCDMA method also meets all kinds of QoS requirements simultaneously, providing diverse, flexible, two-way transmission services and better communication quality to reduce transmission interruption rates.

The access stratum of the 3G mobile telecommunications system comprises a radio resource control (RRC), radio link control (RLC), media access control (MAC), packet data convergence protocol (PDCP), broadcast/multicast control (BMC) and other sub-layers of different functions. The operations of the above-mentioned sub-layers are well known for those skilled in the art, and will not be further mentioned. In addition, the 3G mobile telecommunications system can provide different levels of transmission quality and operate in different modes according to the different requirements, for instance, Transparent Mode (TM), Unacknowledged Mode (UM), Acknowledged Mode (AM). TM is used for services requiring instant transmission, UM is used for services requiring instant transmission as well as packet orders, and AM is used for robust services requiring data accuracy but not instant transmission.

In AM, for better data accuracy and robustness, RLC layers of a transmitter and a receiver initiate a status report procedure at an appropriate time to have the transmitter poll the receiver, so that the receiver transmits a STATUS report, or a piggybacked STATUS report to the transmitter. According to the STATUS report, the transmitter determines a reception status of Protocol Data Units (PDUs) received by the receiver, and decides to retransmit PDUs if necessary, so as to maintain data accuracy.

Therefore, via the poll function, the transmitter can determine the reception status of the receiver, to execute related procedures. There are several poll triggers to trigger the poll function in the prior art, as follows:
(1) "Last PDU in buffer": When the last PDU in a buffer is scheduled for transmission for the first time, the poll function is triggered.
(2) "Last PDU in Retransmission buffer": When the last PDU in a re-transmission buffer is scheduled for retransmission, the poll function is triggered.
(3) "Poll Timer": A timer Timer_Poll is started after a poll is sent. If the timer Timer_Poll expires while the corresponding STATUS report is not yet received, the transmitter triggers the poll function. This trigger can be named as "Poll retransmission timer."
(4) "Every Poll_PDU PDU": Each time a predefined number of PDUs have been scheduled for transmission or retransmission, the poll function is triggered.
(5) "Every Poll_SDU SDU": Each time a predefined number of Service Data Units have been scheduled for transmission or retransmission, the poll function is triggered.
(6) "Window Based": When a predefined percentage of transmission window is reached, the poll function is triggered.
(7) "Timer Based": The transmitter triggers the poll function periodically. This trigger can be named as "Periodic Timer."

After the poll function is triggered, the transmitter sends a PDU with a polling bit equal to 1 or a STATUS PDU containing a Poll SUFI (Super-field) to the receiver, to indicate the receiver to output a STATUS report.

If the aforementioned triggers are not effectively controlled, the poll function may be triggered too frequently. In order to avoid frequent triggers of the poll function, the upper layer of the RLC layer can configure a timer Timer_Poll_Prohibit to prohibit transmission of polls within a certain period. However, under this circumstance, if the transmitter supports the aforementioned triggers as well as the poll prohibit function, the triggering efficiency of the poll function may be reduced. For example, if a poll indication (a PDU with a polling bit equal to 1 or a STATUS PDU containing a Poll SUFI) is lost, the next poll indication will be delayed until the timer Timer_Poll_Prohibit expires. Thus, the triggering efficiency of the poll function is reduced.

This in mind, the present invention aims at providing a method and apparatus for triggering a poll function in a wireless communications system, for efficiently triggering the poll function, so as to avoid both poll delay and frequent polling, and enhance transmission efficiency.

This is achieved by a method and apparatus for triggering a poll function in a wireless communications system according to claims 1 and 12. The dependent claims pertain to corresponding further developments and improvements.

As will be seen more clearly from the detailed description following below, the claimed method for triggering a poll function in a transmitter of a wireless communications system comprises triggering the poll function for polling status of a receiver, and a radio link control entity of the transmitter supporting a "Last PDU" trigger and a "Poll retransmission timer" trigger, and not supporting a "Periodic Timer" trigger.

In the following, the invention is further illustrated by way of example, taking reference to the accompanying drawings. Thereof
Fig. 1 is a schematic diagram of a wireless communications system.
Fig. 2 is a function block diagram of a wireless communications device.
Fig. 3 is a diagram of program code of Fig. 2.
Fig. 4 is a flowchart of a process according to an embodiment of the present invention.

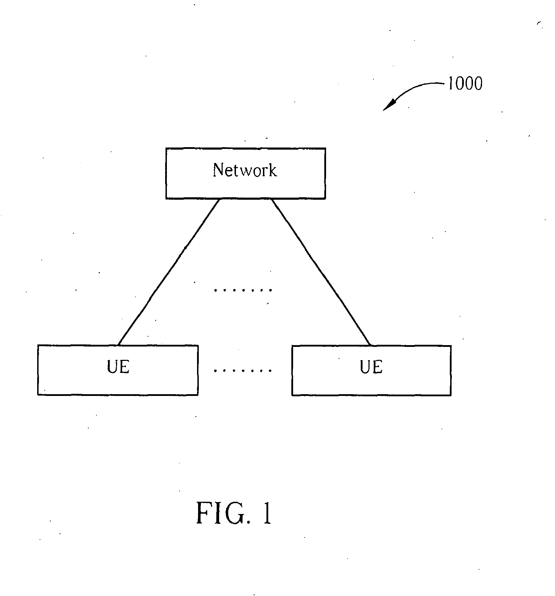

Please refer to Fig. 1, which illustrates a schematic diagram of a wireless communications system 1000. The wireless communications system 1000 can be a 3G mobile telecommunications system, an LTE (long-term evolution) system or other mobile communications systems, and is briefly composed of a network and a plurality of UEs. In Fig. 1, the network and the UEs are simply utilized for illustrating the structure of the wireless communications system 1000. Practically, the network may comprise a plurality of base stations (Node Bs), radio network controllers and so on according to actual demands, and the UEs can be devices such as mobile phones, computer systems, etc. Besides, the network and the UE can be seen as a transmitter or receiver according to transmission direction, e.g., for uplink, the UE is the transmitter and the network is the receiver, and for downlink, the network is the transmitter and the UE is the receiver.

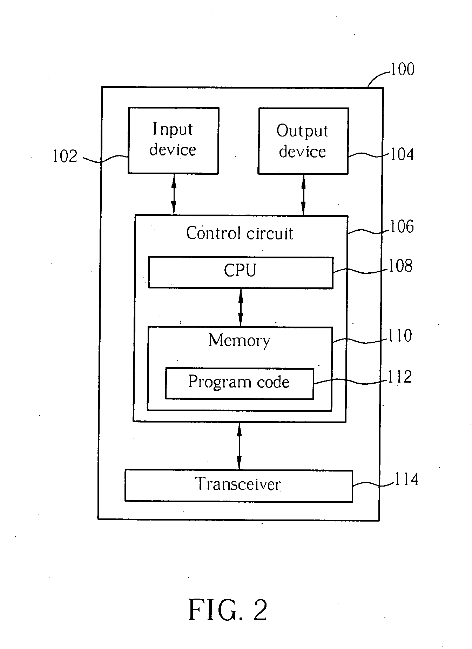

Please refer to Fig. 2, which is a functional block diagram of a communications device 100. The communications device 100 is utilized for realizing the network or the UEs. For the sake of brevity, Fig. 2 only shows an input device 102, an output device 104, a control circuit 106, a central processing unit (CPU) 108, a memory 110, a program code 112, and a transceiver 114 of the communications device 100. In the communications device 100, the control circuit 106 executes the program code 112 in the memory 110 through the CPU 108, thereby controlling an operation of the communications device 100. The communications device 100 can receive signals input by a user through the input device 102, such as a keyboard, and can output images and sounds through the output device 104, such as a monitor or speakers. The transceiver 114 is used to receive and transmit wireless signals, delivering received signals to the control circuit 106, and outputting signals generated by the control circuit 106 wirelessly. From a perspective of a communications protocol framework, the transceiver 114 can be seen as a portion of Layer 1, and the control circuit 106 can be utilized to realize functions of Layer 2 and Layer 3.

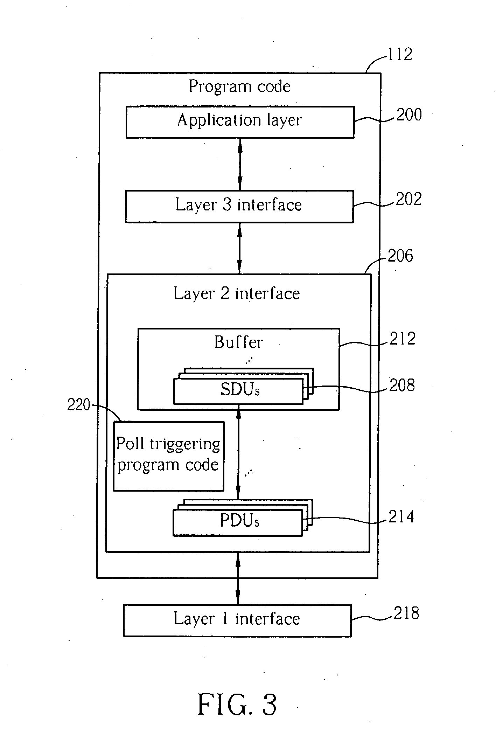

Please continue to refer to Fig. 3. Fig. 3 is a diagram of the program code 112 shown in Fig. 2. The program code 112 comprises an application layer 200, a Layer 3 interface 202, and a Layer 2 interface 206, and is coupled to a Layer 1 interface 218. When a signal is transmitted, the Layer 2 interface 206 forms a plurality of SDUs 208 according to data submitted by the Layer 3 interface 202, and stores the plurality of SDUs 208 in a buffer 212. Then, based on the SDUs 208 stored in the buffer 212, the Layer 2 interface 206 generates a plurality of PDUs 214, and sends the plurality of PDUs 214 to a destination terminal through the Layer 1 interface 218. In contrast, when a wireless signal is received, the signal is received through the Layer 1 interface 218, then delivered as PDUs 214 to the Layer 2 interface 206. The Layer 2 interface 206 restores the PDUs 214 to SDUs 208 and stores the SDUs 208 in the buffer 212. Last, the Layer 2 interface 206 delivers the SDUs 208 stored in the buffer 212 to the Layer 3 interface 202.

When the communications device 100 operates in AM, for better data accuracy and robustness, the Layer 2 interface 206 (RLC layer) can initiate a status report procedure at an appropriate time to poll a receiver and request a status report, or a piggybacked status report. In such a situation, the embodiment of the present invention provides a poll triggering program code 220 for accurately triggering a poll function.

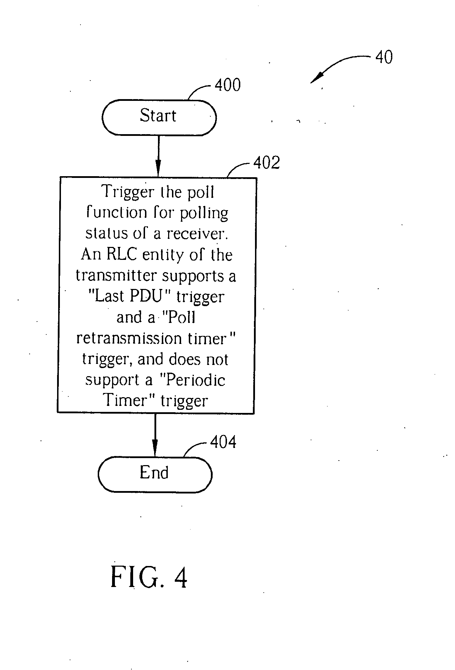

Please refer to Fig. 4, which illustrates a schematic diagram of a process 40 according to an embodiment of the present invention. The process 40 is utilized for triggering a poll function in a transmitter of the wireless communications system 1000. The transmitter can be the network or UE. The process 40 can be compiled into the poll triggering program code 220, and comprises the following steps:
Step 400: Start.
Step 402: Trigger the poll function for polling status of a receiver. An RLC entity of the transmitter supports a "Last PDU" trigger and a "Poll retransmission timer" trigger, and does not support a "Periodic Timer" trigger.
Step 404: End.

According to the process 40, the RLC entity (the Layer 2 interface 206) supports the "Last PDU" trigger and the "Poll retransmission timer" trigger, and does not support the "Periodic Timer" trigger. Definitions of the "Poll retransmission timer" trigger and the "Periodic Timer" trigger are specified in the above, while the "Last PDU" trigger can be the "Last PDU in buffer" trigger and/or the "Last PDU in Retransmission buffer" trigger, which are also specified in the above.

Therefore, the embodiment of the present invention supports "Last PDU in buffer", "Last PDU in Retransmission buffer", and "Poll retransmission timer", and dose not support "Periodic Timer." In such a situation, the transmitter can efficiently trigger the poll function, to avoid frequent triggers of the poll function, and enhance transmission efficiency. Preferably, the embodiment of the present supports the "Window Based" trigger, and does not support the "Every Poll_PDU PDU" trigger and the "Every Poll_SDU SDU" trigger. Besides, in the embodiment of the present invention, preferably, the transmitter does not support the poll prohibit function, to avoid poll delay, and the receiver supports the status report prohibit function, to avoid transmission of the same status report. That is, the transmitter does not prohibits triggering the poll function within a certain period, while the receiver can prohibit outputting a status report within a certain period.

In summary, in the embodiment of the present invention, the RLC entity of the transmitter supports "Last PDU" and "Poll retransmission timer", and dose not support "Periodic Timer", so as to efficiently trigger the poll function, avoid poll delay and frequent polling, and enhance transmission efficiency.

## Claims

1. A method for triggering a poll function in a transmitter of a wireless communications system comprising:
triggering the poll function for polling status of a receiver (402);
**characterized by** a radio link control entity of the transmitter supporting a "Last Protocol Data Unit", called PDU hereinafter, trigger and a "Poll retransmission timer" trigger, and not supporting a "Periodic Timer" trigger (402).

2. The method of claim 1, **characterized in that** the "Last PDU" trigger is triggering the polling function when a last PDU in a buffer of the transmitter is scheduled for transmission for the first time.

3. The method of claim 1, **characterized in that** the "Last PDU" trigger is triggering the polling function when a last PDU in a re-transmission buffer of the transmitter is scheduled for retransmission.

4. The method of claim 1, **characterized in that** the "Poll retransmission timer" trigger is triggering the polling function when a timer expires and a corresponding status report is not received.

5. The method of claim 4, **characterized in that** the timer is a Timer_Poll timer.

6. The method of claim 1, **characterized in that** the "Periodic Timer" trigger is the transmitter triggering the polling function periodically.

7. The method of claim 1, **characterized in that** the transmitter dose not support a poll prohibit function, which is utilized for prohibiting the transmitter from triggering the poll function within a certain period.

8. The method of claim 1, **characterized in that** the receiver supports a status report prohibit function, which is utilized for prohibiting the receiver from outputting a status report within a certain period.

9. The method of claim 1, **characterized in that** the transmitter supports a "Window Based" trigger, which triggers the poll function when a predefined percentage of transmission window of the transmitter is reached.

10. The method of claim 1, **characterized in that** the transmitter dose not support an "Every Poll_PDU PDU" trigger, which triggers the poll function each time a predefined number of PDUs have been scheduled for transmission or retransmission.

11. The method of claim 1, **characterized in that** the transmitter dose not support an "Every Poll_SDU SDU" trigger, which triggers the poll function each time a predefined number of Service Data Units have been scheduled for transmission or retransmission.

12. A communications device (100) for accurately trigger a poll function in a wireless communications system comprising:
a control circuit (106) for realizing functions of the communications device (100);
a processor (108) installed in the control circuit (106), for executing a program code (112) to command the control circuit (106); and
a memory (110) installed in the control circuit (106) and coupled to the processor (108) for storing the program code (112);
wherein the program code (112) comprises:
triggering the poll function for polling status of a receiver (402);
**characterized by** comprising a radio link control entity supporting a "Last Protocol Data Unit", called PDU hereinafter, trigger and a "Poll retransmission timer" trigger, and not supporting a "Periodic Timer" trigger (402).

13. The communications device of claim 12, **characterized in that** the "Last PDU" trigger is triggering the polling function when a last PDU in a buffer of the communications device is scheduled for transmission for the first time.

14. The communications device of claim 12, **characterized in that** the "Last PDU" trigger is triggering the polling function when a last PDU in a re-transmission buffer of the communications device is scheduled for retransmission.

15. The communications device of claim 12, **characterized in that** the "Poll retransmission timer" trigger is triggering the polling function when a timer expires and a corresponding status report is not received.

16. The communications device of claim 15, **characterized in that** the timer is a Timer_Poll timer.

17. The communications device of claim 12, **characterized in that** the "Periodic Timer" trigger is the communications device triggering the polling function periodically.

18. The communications device of claim 12, **characterized in that** the radio link control entity dose not support a poll prohibit function, which is utilized for prohibiting the communications device from triggering the poll function within a certain period.

19. The communications device of claim 12, **characterized in that** the receiver supports a status report prohibit function, which is utilized for prohibiting the receiver from outputting a status report within a certain period.

20. The communications device of claim 12, **characterized in that** the radio link control entity supports a "Window Based" trigger, which triggers the poll function when a predefined percentage of transmission window of a transmitter is reached.

21. The communications device of claim 12, **characterized in that** the radio link control entity dose not support an "Every Poll_PDU PDU" trigger, which triggers the poll function each time a predefined number of PDUs have been scheduled for transmission or retransmission.

22. The communications device of claim 12, **characterized in that** the radio link control entity dose not support an "Every Poll_SDU SDU" trigger, which triggers the poll function each time a predefined number of Service Data Units have been scheduled for transmission or retransmission.
